Europäisches Patentamt

European Patent Office

Office européen des brevets

(11) Publication number: **0 152 865**
**B1**

# EUROPEAN PATENT SPECIFICATION

(45) Date of publication of patent specification: **27.09.89**

(21) Application number: **85101240.1**

(22) Date of filing: **06.02.85**

(51) Int. Cl.⁴: **B 29 C 47/00, B 29 C 47/86 //**
**B29K23/00, B29L23/00**

(54) **Process for the preparation of blown film.**

(30) Priority: **07.02.84 NL 8400375**

(43) Date of publication of application:
**28.08.85 Bulletin 85/35**

(45) Publication of the grant of the patent:
**27.09.89 Bulletin 89/39**

(84) Designated Contracting States:
**AT BE CH DE FR GB IT LI LU NL SE**

(56) References cited:
**EP-A-0 051 358**
**US-A-3 920 782**
**US-A-4 388 262**
**US-A-4 399 094**

(73) Proprietor: **STAMICARBON B.V.**
**Mijnweg 1**
**NL-6167 AC Geleen (NL)**

(72) Inventor: **van der Molen, Theodorus Jacobus**
**Rott 27**
**NL-6294 NL Vijlen (NL)**

Courier Press, Leamington Spa, England.

**Description**

The invention relates to a process for the manufacturing of blown film from a polymer composition on the basis of polyethylene, which polyethylene has a density of 910 to 940 kg/m³, in which the polymer composition is, in molten condition, forced via an extruder through an annular die and is made to balloon out by means of a gas, supplied through an opening within the annular die, following which the polymer composition that has formed the balloon is cooled, flattened and rolled up.

Processes for the manufacturing of blown film are well-known in themselves and are described in, for instance, 'Petrothene Polyolefins . . . . . . a processing guide' (a publication of the National Distillers and Chemical Corporation, 1971, 4th ed.).

Low-density polyethylene (LDPE) blown film has found large-scale application as packaging material. The main requirements to be met by packaging material concern mechanical properties, such as stiffness, tear resistance, tensile strength, puncture resistance, and the like.

Depending on the application, said material must often also satisfy requirements in the field of optical properties such as transparency, opacity and gloss.

Film to be processed into refuse bags, for instance, will need to have a good puncture resistance and tear properties, while film for carrier bags must in addition have high stiffness. In applications such as bread packaging, it is especially stiffness and opticals that play a part.

From 'Petrothene Polyolefins . . . . . . a processing guide' it is known that the best optical properties are obtained when the polymer melt is processed at the highest possible temperatures. A melt temperature of 250°C is not exceptional.

One of the factors affecting the mechanical properties is the degree of orientation of the melt.

A recent development in the field of blown film preparation from low-density polyethylene is the so-called long-stalk extrusion. This process, described in Plastics World of June 1982, pp. 62—64, starts from LDPE with a low melt index, which is processed at a temperature of 190°C with a die gap of about 1.1 mm and an extra high frost line. The height of the frost line is the distance between the annular die and the frost line.

The main difference between this long-stalk extrusion and conventional extrusion lies in the degree of orientation of the melt. This results in blown film prepared by the long-stalk process having a better impact strength than conventional blown film. A drawback is that the stiffness and the tear resistance, especially in machine direction, deteriorate substantially. In addition, it is not possible to convert linear low-density polyethylene into film this way.

Film blowing out of low density polyethylene homopolymer is known from US—A—4,388,262, in which it is disclosed to use a special apparatus in order to process LDPE through a die gap having a width of 0.9 mm at a melt temperature of 105°C without deterioration of the mechanical properties.

In US—A—4,399,094 the use of an annealing chamber is described, which prevents deterioration of optical properties when processing LDPE at lower temperatures.

The object of the present invention is to provide a process for the preparation of blown film from a polymer composition on the basis of polyethylene with a density of 910—940 kg/m³ that yields a film having good mechanical properties, notably high stiffness and good tear properties, and also good optical properties.

This object is achieved by processing the polymer composition comprising
a) a polyethylene homopolymer having a density of 910—940 kg/m³, or
b) a copolymer of ethylene with up to 10 wt.% of a polar comonomer, or
mixtures of a) and b), or
mixtures of a) and/or b) with up to 50% of polyethylene with a density above 940 kg/m³ or copolymers of ethylene with C₃ to C₁₅ alkene monomer,
in molten condition, via an extruder, through an annular die at a temperature of the melt at the die gap of below 160°C, the annular die gap having a width of at least 2 mm and the polymer composition having a melt index of not lower than 2 dg/min.

A method for processing linear polyethylene into blown film using die gaps of about 0,4—5 mm is described in European patent application 51358. This method uses specially formed die gaps in order to prevent melt fracture. The temperature of the melt is between about 162 and 206°C. This method relates only to linear polyethylene.

Surprisingly, when processing is carried out under conditions according to the invention, special orientation effects occur, as a result of which good mechanical properties are imparted to the film, such as good tear resistance and tensile strength, high stiffness, etc. This effect increases when the temperature of the melt at the location of the die gap below 150°C, so that processing at below 150°C is to be preferred, and in particular at below 140°C.

Polymer compositions that are suitable for being processed into blown film in accordance with the invention generally contain at least 50 wt.% polyethylene homopolymer and/or one or more copolymers with a density of 910—940 kg/m³. Low-density polyethylene homopolymer and copolymers of ethylene and one or more polar comonomers with a comonomer content of at most 10 wt.% relative to the ethylene (e.g. vinylacetate, methacrylate) can be applied with good results. Also mixtures are suitable, like for instance mixtures of polyethylene homo-and/or copolymers with a density of 910—940 kg/m³, or mixtures of polyethylene homo- and/or copolymers having a density of 910—940 kg/m³ with low-density polyethylene copolymers (with a density less than 940 kg/m³) and/or high density polyethylene (with a density in excess of 940 kg/cm³). In these mixtures preferably at least 70 wt.%, relative to the total polymer content, of the homo- and/or copolymer with a density of 910—940 kg/cm³ is present. For the manufacturing of films having good optical properties, the use of a polymer composition on the basis of polyethylene homopolymer or a copolymer of ethylene and one or more polar comonomers with a comonomer content of at most 10 wt.% relative to the ethylene, is to be recommended. The process according to the invention is particularly suitable for the preparation of films having good mechanical and optical properties from low-density polyethylene homopolymer or ethylene vinylacetate copolymer.

Furthermore, various additives, such as stabilisers, slip agents, fillers, colourants, waxes and the like, may be present. The amount by weight of additives usually will not exceed 20% of the amount by weight of polymer.

The melt index of these polymer compositions, determined according to ASTM D 1238, may have values up to 30 dg/min. In view of the low processing temperature, however, it is to be recommended to choose a melt index of not lower than 2 dg/min. The favourable effect that low-temperature processing in combination with the large die gap has on the mechanical properties, decreases when the melt index exceeds 25 dg/min, and is most pronounced at a melt index of at most 20 dg/min, in particular at most 17 dg/min.

The advantage of the invention is that also polymer compositions having a relatively high melt index can be processed into blown film with good mechanical properties.

Often, packaging film must not only satisfy requirements with respect to its mechanical properties, but also requirements relating to its optical properties. The optical properties of the film improve when use is made of a polymer composition having a melt index of at least 5 dg/min, in particular at least 8 dg/min.

There already is advantage in applying the invention at die gaps of 2 mm, but larger die gaps, for instance of 5 or 10 mm, can also be applied; in addition, the geometry of the die may be varied. It has now been found that the mechanical properties of the film improve when the die gap used is at least 3 mm and at most 5 mm.

In combination with the low processing temperature, these larger die gaps result in even better mechanical properties, notably in good stiffness and tear properties.

In blown film extrusion, the polymer composition exits the annular die in molten condition and is subsequently blown up. The resulting balloon is cooled by contacting it with relatively high cool air or water.

Balloon diameter divided by annular die diameter is called the blow-up ratio. This may vary between 1 and 6, but generally is 1.5 to 4. These values can also be applied in the process according to the invention, yielding good results.

The process according to the invention is suitable especially for the manufacturing of monolayer film, but can also be used for multilayer film.

The invention will now be elucidated on the basis of some examples.

### Examples and comparative examples 1 through 8

Blown film was produced under conditions as shown in the table. Use was made of a Schwabenthan extrusion equipment with a screw diameter of 30 mm and a length/diameter ratio of 24:1. The diameter of the annular die was 5 cm.

The melt temperature at the die gap was determined by infrared measurement. Of the film, the following properties were determined:
modulus of elasticity according to ASTM D 1922;
strength and tensile strength according to ISO R 527;
puncture resistance, determined from the energy required to puncture the film with a plunger at a rate of 50 mm/min;
notched tear resistance according to a method derived from DIN 53363, but with the notch at the centre of the film, at a drawing rate of 2.5 cm/min;
gloss according to ASTM D 523;
opacity according to ASTM D 1003;
transparency according to the Electro Evans Ltd. method.

Table

| | comp. ex. 1 | ex. 2 | ex. 3 | comp. ex. 4 | ex. 5 | ex. 6 | ex. 7 | ex. 8 |
|---|---|---|---|---|---|---|---|---|
| Polymer composition | LDPE | LDPE | LDPE | LDPE | LDPE | LDPE | LDPE | LDPE |
| density, $kg/m^3$ | 922 | 922 | 921 | 921 | 921 | 921 | 921 | 921 |
| melt index, dg/min | 0.3 | 0.3 | 2 | 9 | 9 | 14.5 | 14.5 | 14.5 |
| temperature, °C | 182 | 137 | 159 | 170 | 140 | 156 | 139 | 141 |
| die gap, μm | 2000 | 2000 | 3000 | 2000 | 2000 | 2000 | 2000 | 3000 |
| frost line, cm | 15 | 15 | 16 | 8 | 8 | 10 | 8 | 14 |
| blow-up ratio | 3 | 3 | 2 | 2 | 2 | 2 | 2 | 2 |
| film thickness, μm | 30 | 30 | 22 | 25 | 25 | 25 | 25 | 25 |
| output, g/min | 50 | 50 | 50 | 50 | 50 | 50 | 50 | 50 |
| modulus of elasticity // $N/mm^2$ | 182 | 222 | 220 | 127 | 174 | 133 | 143 | 135 |
| $\perp$ | 239 | 255 | 217 | 136 | 199 | 153 | 176 | 210 |
| yield strength, $N/mm^2$ // | 10 | 13.5 | 12 | 9.5 | 11 | 9 | 9.5 | n.m.[1] |
| $\perp$ | 11.5 | 11 | 9 | 8.5 | 10 | 9 | 10 | n.m.[1] |
| puncture resistance, J/m | 816 | 895 | n.m.[1] | 459 | 424 | n.m.[1] | 468 | n.m.[1] |
| notched tear resistance, // $kJ/m^2$ | 294 | 322 | 393 | 277 | 287 | 251 | 285 | 305 |
| $\perp$ | 184 | 1210[2] | 926[2] | 171 | 356[2] | 154 | 218[2] | 449[2] |
| tensile strength, $N/mm^2$ // | 29 | 35 | 36 | 19 | 28 | 16.5 | 20 | n.m.[1] |
| $\perp$ | 29 | 24 | 11 | 11 | 15 | 10.5 | 13 | n.m.[1] |
| gloss, o/oo | 40 | 32 | 50 | 85 | 88 | 80 | 89 | 82 |
| opacity, % | 9 | 15 | 9 | 7 | 4 | 8 | 4 | 12 |
| transparency | 18 | 49 | 18 | 4.1 | 5.8 | 3 | 5.3 | 4.4 |

Notes:
1. not measured
2. the notch did not tear further, so that drawing phenomena occurred
3. owing to the high opacity, the value for transparency cannot be determined in a reliable way

## Claims

1. Process for the manufacturing of blown film from a poymer composition comprising:
a) a polyethylene homopolymer having a density of 910—940 $kg/m^3$, or
b) a copolymer of ethylene with up to 10 wt.% of a polar comonomer, or
mixtures of a) and b), or
mixtures of a) and/or b) with up to 50% of polyethylene with a density above 940 $kg/m^3$ or copolymers of ethylene with $C_3$ to $C_{15}$ alkene monomer,
in which the polymer composition is, in molten condition, forced, via an extruder, through an annular die, and is made to balloon out by means of a gas, supplied through an opening within the annular die, following which the polymer composition that has formed the balloon is cooled, flattened and rolled up, the polymer composition being processed at a temperature of the melt at the die gap of below 160°C, the annular die gap having a width of at least 2 mm and the polymer composition having a melt index of not lower than 2 dg/min.

2. Process according to claim 1, characterized in that the polymer composition is processed at a temperature of the melt at the die gap of below 150°C.

3. Process according to claim 2, characterized in that the polymer composition is processed at a temperature of the melt at the die gap of below 140°C.

4. Process according to any one of claims 1—3, characterized in that use is made of a polymer composition having a melt index between 2 and 25 dg/min.

5. Process according to claim 4, characterized in that use is made of a polymer composition having a melt index between 5 and 20 dg/min.

6. Process according to claim 5, characterized in that use is made of a polymer composition having a melt index between 8 and 17 dg/min.

7. Process according to any one of claims 1—6, characterized in that a die gap of at least 2 mm and at most 5 mm is applied.

8. Process according to claim 7, characterized in that a die gap of at least 3 mm is applied.

9. Process according to any one of claims 1—8, characterized in that monolayer blown film is manufactured.

10. Process according to claim 9, characterized in that use is made of polyethylene homopolymer.

11. Process according to claim 9, characterized in that use is made of ethylene vinyl acetate copolymer.

## Patentansprüche

1. Verfahren zur Herstellung einer Blasfolie aus einer Polymerzusammensetzung umfassend

a) ein Polyäthylenhomopolymer mit einer Dichte von 910 bis 940 kg/m$^3$ oder

b) ein Copolymer von Äthylen mit bis zu 10 Gew.% eines polaren Comonomers oder

Mischung von a) und b) oder

Mischungen von a) und/oder b) mit is zu 50% Polyäthylen mit einer Dichte von mehr als 940 kg/m$^3$ oder Copolymeren von Äthylen mit C$_3$- bis C$_{15}$-Alkenmonomer,

in dem die Polymerzusammensetzung in geschmolzenem Zustand über einen Extruder durch eine Ringform gepreßt und mittels eines Gases, durch eine öffnung in der Ringform zugeführt wird, zu einem Ballon aufgeblasen wird, worauf die Polymerzusammensetzung, die den Ballon gebildet hat, abgekühlt, flachgedrückt und aufgewickelt wird, wobei die Polymerzusammensetzung bei einer Temperatur der Schmelze am Formspalt unterhalb 160°C verarbeitet wird, der Ringformspalt eine Breite von mindestens 2 mm aufweist und die Polymerzusammensetzung einen Schmelzindex von nicht weniger als 2 dg/min besitzt.

2. Verfahren nach Anspruch 1, dadurch gekennzeichnet, daß die Polymerzusammensetzung bei einer Temperatur der Schmelze am Formspalt von weniger als 150°C verarbeitet wird.

3. Verfahren nach Anspruch 2, dadurch gekennzeichnet, daß die Polymerzusammensetzung bei einer Temperatur der Schmelze am Formspalt von weniger als 140°C verarbeitet wird.

4. Verfahren nach den Ansprüchen 1 bis 3, dadurch gekennzeichnet, daß eine Polymerzusammensetzung mit einem Schmelzindex von 2 bis 25 dg/min verwendet wird.

5. Verfahren nach Anspruch 4, dadurch gekennzeichnet, daß die Polymerzusammensetzung mit einem Schmelzindex von 5 bis 20 dg/min verwendet wird.

6. Verfahren nach Anspruch 5, dadurch gekennzeichnet, daß die Polymerzusammensetzung mit einem Schmelzindex von 8 bis 17 dg/min verwendet wird.

7. Verfahren nach einem der Ansprüchen 1 bis 6, dadurch gekennzeichnet, daß ein Formspalt von mindestens 2 mm und höchstens 5 mm angewandt wird.

8. Verfahren nach Anspruch 7, dadurch gekennzeichnet, daß ein Formspalt von mindestens 3 mm angewandt wird.

9. Verfahren nach einem der Ansprüche 1 bis 8, dadurch gekennzeichnet, daß eine einschichtige Blasfolie hergestellt wird.

10. Verfahren nach Anspruch 9, dadurch gekennzeichnet, daß Polyäthylenhomopolymer verwendet wird.

11. Verfahren nach Anspruch 10, dadurch gekennzeichnet, daß Äthylenvinylacetatcopolymer verwendet wird.

## Revendications

1. Procédé de fabrication d'une pellicule gonflée à partir d'une composition polymère comprenant:

(a) un homopolymère de polyéthylène ayant une masse volumique de 910 à 940 kg/m$^3$, ou

(b) un copolymère d'éthylène avec un maximum de 10% en poids d'un comonomère polaire, ou

des mélanges de (a) et (b), ou

des mélanges de (a) et/ou (b) avec un maximum de 50% de polyéthylène ayant une masse volumique de plus de 940 kg/m$^3$, ou des copolymères d'éthylène avec un monomère alcène en C$_{3-15}$, dans lequel la composition polymère et refoulée à l'état fondu à l'aide d'une extrudeuse à travers une filière annulaire et est obligée de gonfler à l'aide d'un gaz admis à travers une ouverture dans la filière annulaire, après quoi on refroidit la composition polymère qui à formé un ballon, on l'aplatit et on l'enroule, la composition polymère étant traitée à une température de fusion à la brèche de la filière au dessous de 160°C, la brèche de filière annulaire ayant une largeur d'au moins 2 mm et la composition polymère ayant un indice de fluidité à l'état fondu qui n'est pas inférieur à 2 dg/min.

2. Procédé selon la revendication 1, caractérisé en ce qu'on traite la composition polymère à une température de la masse fondue dans le brèche de la filière au dessous de 150°C.

3. Procédé selon la revendication 2, caractérisé en ce qu'on traite la composition polymère à une température de masse fondue à la brèche de la filière au dessous de 140°C.

4. Procédé selon les revendications 1 à 3, caractérisé en ce qu'on utilise une composition polymère ayant un indice de fluidité à l'état fondu compris entre 2 et 25 dg/min.

5. Procédé selon la revendication 4, caractérisé en ce qu'on utilise une composition polymère ayant un indice de fluidité à l'état fondu compris entre 5 et 20 dg/min.

6. Procédé selon la revendication 5, caractérisé en ce qu'on utilise une composition polymère ayant un indice de fluidité à l'état fondu compris entre 8 et 17 dg/min.

7. Procédé selon les revendications 1 à 6, caractérisé en ce qu'on utilise une brèche de filière d'au moins 2 mm et au plus de 5 mm.

8. Procédé selon la revendication 7, caractérisé en ce qu'on utilise une brèche de filière d'au moins 3 mm.

9. Procédé selon les revendications 1 à 8, caractérisé en ce qu'on fabrique une pellicule soufflée monocouche.

10. Procédé selon l'une quelconque des revendications précédentes, caractérisé en ce qu'on utilise un homopymère de polyéthylène.

11. Procédé selon l'une quelconque des revendication 1 à 9, caractérisé en ce qu'on utilise un copolymère éthylene/acétate de vinyle.